# EUROPÄISCHE PATENTSCHRIFT

(11) **EP 0 785 424 B1**
(45) Veröffentlichungstag und Bekanntmachung des Hinweises auf die Patenterteilung: **11.04.2001**
(21) Anmeldenummer: 97100160.7
(22) Anmeldetag: 08.01.1997
(51) Int. Cl.: G01N 27/414

(54) **Verfahren zum Herstellen einer Messeinrichtung sowie danach hergestellte Messeinrichtung**
Method for making a measuring device and measuring device made by this method
Procédé pour fabriquer une installation de mesure ainsi qu'installation de mesure ainsi faite

(30) Priorität: 17.01.1996 DE 19601488
(43) Veröffentlichungstag der Anmeldung: 23.07.1997
(73) Patentinhaber: Micronas GmbH, 79108 Freiburg (DE)
(72) Erfinder: Sieben, Ulrich, Dr.-Dipl.-Phys., 79276 Reute (DE); Wolf, Bernhard, Prof.-Dr., D-18057 Rostock (DE); Haberland, Hellmut, Prof.-Dr., D-79353 Bahlingen (DE); Cremer, Christoph, Dr., D-69126 Heidelberg (DE)
(74) Vertreter: Schmitt, Hans, Dipl.-Ing.

(56) Entgegenhaltungen:
- WO-A-88/09499
- DE-A- 2 947 050
- DE-A- 19 512 117
- US-A- 4 334 880
- SENSORS AND ACTUATORS-A PHYSICAL, Bd. A32, Nr. 1/3, April 1992, LAUSANNE, CH, Seiten 307-312, XP000287348 N. JAFFREZIC-RENAULT: "PREPARATION OF WELL-ENGINEERED THIN MOLECULAR LAYERS ON SEMICONDUCTOR-BASED TRANSDUCERS"

## Beschreibung

Die Erfindung bezieht sich auf ein Verfahren zum Herstellen einer Meßeinrichtung zur Messung oder Untersuchung physiologischer Parameter an Biokomponenten, mit wenigstens einem Sensor, der eine Meßstruktur mit einer aktiven Kontaktfläche für die Biokomponenten aufweist. Weiterhin bezieht sich die Erfindung auf eine danach hergestellte Meßeinrichtung.

Biosensoren mit der ganzen Vielfalt zellulärer Mikrosysteme gewinnen immer mehr an Bedeutung. Die Kombination des durch die Biokomponenten gebildeten biologischen Mikrosystems mit einem physikalischen Sensor bzw. Transducer erlaubt die Umsetzung der primären Signalantworten des biologischen Systems in ein elektrisches Signal, welches dann problemlos registriert und weiterverarbeitet werden kann.
Allen Sensoren ist gemeinsam, daß die primäre, sensorische Funktion des Systems von einer lebenden Zelle oder deren Komponenten (Rezeptoren, Gamma-Globuline) übernommen wird und daß deren Ausgangssignale mit unterschiedlichen, physikalischen Transducern empfangen wird.

Aus US-A-4334880 ist eine Meßeinrichtung zur Messung oder Untersuchung physiologischer Parameter an Biokomponenten bekannt, die einen Halbleitersensor mit einer aktiven Kontaktfläche aufweist, auf der Antikörper immobilisiert sind. Die Kontaktfläche mit den Antikörper steht in Gebrauchsstellung mit einem Analyten in Berührung, der in einer Flüssigkeit befindliche, zu untersuchende Biokomponenten enthält. Die Antikörper können sich an den an den auf der Kontaktfläche befindlichen Biokomponenten anlagern und mit diesen eine chemische Bindung eingehen. Durch das Anlagern der Biokomponenten verändern sich die elektrischen Umgebungseigenschaften an der Kontaktfläche, was mittels des Sensors detektiert wird. Der Meßausgang des Sensors ist dazu über einen Meßverstärker mit einer einem Voltmeter verbunden.

Aus DE-A 2947050 ist auch bereits eine Meßeinrichtung zum Nachweis von Ionen, Atomen und Molekülen bekannt, die eine Halbleiterstruktur mit einer halbleitenden Schicht und einer elektrisch leitenden Schicht hat, wobei zwischen diesen Schichten eine elektrisch isolierende Schicht angeordnet ist. Die Halbleiterstruktur ist als MOS-Transistor ausgebildet und weist in der halbleitenden Schicht Drain- und Source-Gebiete auf. Das Gate ist durch die elektrisch leitende Schicht gebildet. Diese hat Öffnungen auf, die es ermöglichen, daß die nachzuweisenden Teilchen sowohl mit der elektrisch leitenden als auch mit der isolierenden Schicht in Berührung kommen können. Dadurch kann einerseits das erforderliche Potential des Gates fixieren werden und andererseits können die Teilchen zur Isolator-Grenzfläche gelangen, um dort eine Änderung der Austrittsarbeit zu verursachen, die sich messen läßt.

Bei der Entwicklung und Erprobung von Sensoren hat sich gezeigt, daß nicht alle Zelltypen beziehungsweise Biokomponenten einen gleich guten Kontakt mit den Transduceroberflächen herstellen können. Zwar ist es in vielen Fällen gelungen, durch die Wahl der Kulturbedingungen gute Haftung für Batch-Verfahren zu erreichen, doch sind die Bedingungen für Fließinjektionseinsätze nicht für alle Zellen oder dergleichen zu gewährleisten. Besonders solche Zellen von tierischen Zell-Linien, die nicht ursprünglich von Tumorzellen abstammen, sind hierbei problematisch.

Weiterhin besteht das Problem bei Immunsensoren auf FET-Basis, das eine optimale Immobilisierung der verwendeten Antikörper eine Ausrichtung der reaktiven Epitope erfordert, um eine bessere Signalantwort zu erhalten.

Aufgabe der vorliegenden Erfindung ist es, die mechanische Verankerung der Biokomponenten (Zellen, Rezeptoren, Gamma-Globuline) auf der aktiven Kontaktfläche des Sensors zu erhöhen und weiterhin die Signalübertragungseigenschaften und die Meßempfindlichkeit zu verbessern.

Zur Lösung dieser Aufgabe wird erfindungsgemäß vorgeschlagen, daß die aktive Kontaktfläche des Sensors etwa entsprechend der äußeren Umrißform der jeweiligen Biokomponenten strukturiert wird.
Durch diese Strukturierung der aktiven Kontaktfläche können sich Biokomponenten - Zellen, Biomoleküle, Teile von Zellen und dergleichen - die selbst Topographien mit Strukturierungseffekten im Nanometerbereich zeigen, wesentlich stabiler an der Kontaktfläche verankern, so daß unter anderem auch eine gute Langzeitstabilität vorhanden ist und der Sensor mit lebenden Zellen oder dergleichen über längere Zeit betriebsfähig gehalten werden kann.
Besonders vorteilhaft ist es dabei, wenn die Form der Biokomponenten vorzugsweise in einer Abdrucktechnik übernommen wird und wenn die Kontaktflächen-Beschichtung mittels Replikatechnik, insbesondere mittels Plasmabeschußtechnik oder Ätztechnik mit einer etwa der Forma der Biokomponenten entsprechenden, komplementären Gegenstrukturierung versehen wird.
Es findet somit eine direkte Anpassung der Oberflächenstruktur beziehungsweise Profilierung an die Topographie der anzulagernden, biologischen Systeme oder Biokomponenten statt, durch die eine besonders gute Verankerung sichergestellt ist. Die Übertragung der Topographie der Biokomponenten auf die aktive Kontaktfläche kann in bekannter Replikatechnik erfolgen.

Eine abgewandelte Form des Verfahrens sieht vor, daß zur Bildung einer Kontaktflächen-Beschichtung mit lockerem Gefüge beziehungsweise Lücken, Materialpartikel zur Bildung von Clustern mit einer kinetischen Energie kleiner als etwa 1 eV/Atom auf die aktive Kontaktfläche aufgeschossen werden. Dabei bestehen die Cluster vorzugsweise aus etwa 12 000 Atomen. Damit kann eine Verankerungs-Schicht auf der Kontaktfläche des Sensors aufgebaut werden, die eine vergleichsweise lockere, poröse Struktur hat. Es sind dabei Lücken beziehungsweise Löcher gebildet, in denen beispielsweise Immun-Rezeptoren verankert werden können. Durch das Ineinandergreifen sind diese Biokomponenten sehr gut verankert und die Sensoren weisen dadurch eine viel bessere Langzeitstabilität auf. Gleichzeitig erreicht man auch eine wesentlich größere Meßempfindlichkeit, da der Abstand zwischen Biokomponente und Sensor-Kontaktfläche zumindest verringert ist und der den Sensor beeinflussende Ladungstransfer-Vorgang somit näher am Sensor abläuft.

Die nach dem erfindungsgemäßen Verfahren hergestellte Meßeinrichtung ist dadurch gekennzeichnet, daß die aktive Kontaktfläche des Sensors eine an die Form der zu untersuchenden Biokomponente etwa angepaßte Oberflächentopographie aufweist. Besonders zweckmäßig ist es dabei, wenn die Oberflächentopographie der Sensor-Kontaktfläche im wesentlichen eine komplementäre Gegenstrukturierung der jeweiligen Biokomponenten ist.
Es ergeben sich dadurch die bereits in Zusammenhang mit dem Sensor-Herstellungsverfahren aufgeführten Vorteile.
Vorteilhaft ist es, wenn der Sensor einen Feldeffekttransistor mit einer Kontaktflächen-Beschichtung aus Aluminiumoxyd, Siliziumnitrid oder dergleichen Strukturierungsmaterial aufweist.
Gegenüber der Kontaktfläche aus Siliziumoxyd, das sehr glatt ist, hat Aluminiumoxyd oder Siliziumnitrid den Vorteil, daß damit auch angerauhte Oberflächen, passend zu der Struktur der Biokomponenten, erzeugt werden können.
Aluminiumoxyd weist eine hohe pH-Sensitivität und eine hohe Sensitivität gegenüber physiologischen Signalen auf und die elektrische Kopplung einer Zelle oder dergleichen Biokomponente an den Feldeffekttransistor ist verbessert und damit dessen Ausgangssignal erhöht.
Siliziumnitrid weist eine hohe Spannungssensitivität auf.

Zusätzliche Ausgestaltungen der Erfindung sind in den weiteren Unteransprüchen aufgeführt. Nachstehend ist die Erfindung mit ihren wesentlichen Einzelheiten anhand der Zeichnungen noch näher erläutert.

Es zeigt:
- Figur 1: eine schematische Darstellung eines biomedizinischen Sensor-Systems mit verschiedenen Sensoren,
- Figur 2: eine schematische Darstellung eines FET-Sensors und
- Figur 3: eine schematische Darstellung eines FET-Sensors mit Beschichtung und angelagerten Immun-Rezeptoren.

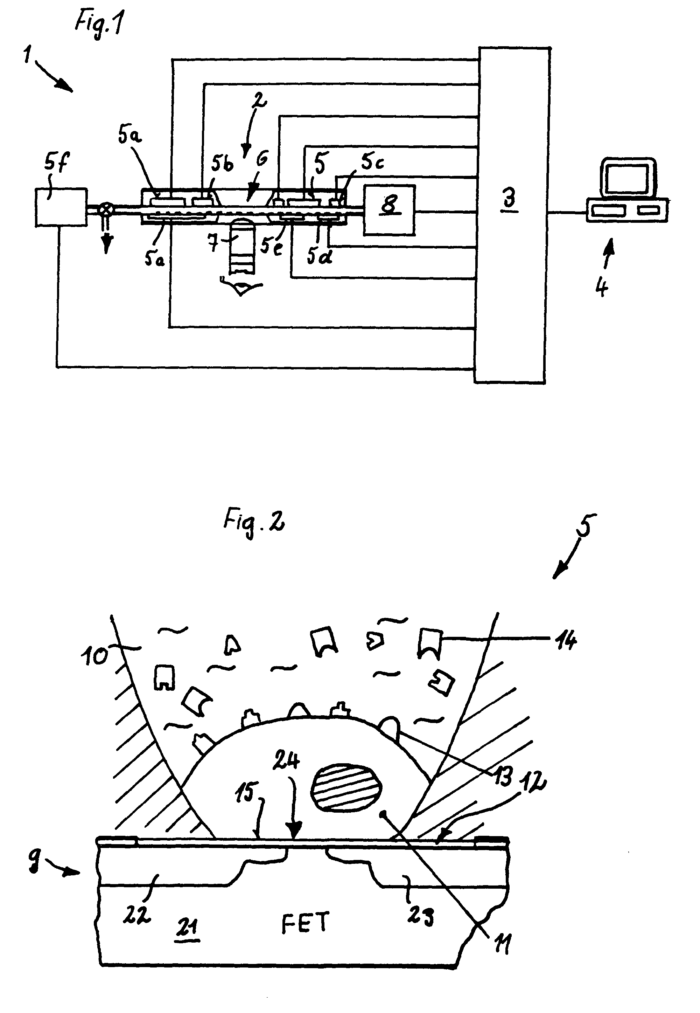

Ein in Figur 1 gezeigtes, biomedizinisches Sensorsystem 1 weist eine miniaturisierte Kammer 2 zur Aufnahme von zu untersuchenden Zellen auf, deren Funktion mit verschiedenen, diskreten Sensoren abgefragt wird. Diese Sensoren sind mit einer Sensoransteuerung und Signalvorverarbeitungseinrichtung 3 verbunden, die ihrerseits an einen Computer 4 zur Meßdatenerfassung und Auswertung sowie zur Meßablaufsteuerung und Temperaturregelung angeschlossen ist.

Im gezeigten Ausführungsbeispiel werden neben Sensoren 5 mit Feldeffekttransistor-Struktur auch optische Sensoren 5a, ein Sauerstoffsensor 5b, Temperatursensoren 5c sowie Sensoren 5d zur Zellpotentialmessung, Interdigitalstrukturen 5 für Impedanzmessungen und bedarfsweise auch noch externe Sensoren 5f eingesetzt.
Bei dem Beobachtungsbereich 6 des Sensorsystems 1 ist noch ein Mikroskop 7 angedeutet. Mit 8 ist ein Funktionsblock für Medium, Testsubstanzen, Pumpen und dergleichen gekennzeichnet. Dieser Funktionsblock sowie auch die Sensoren sind mit der Sensorenansteuerung und Signalvorverarbeitungseinrichtung 3 verbunden.
Die Mikrosensoren haben die verschiedensten Geometrien, sind aber immer so aufgebaut, daß sich entweder lebende Zellen in deren unmittelbarer Umgebung befinden oder aber die Zellen integraler Bestandteil des Mikrosensors sind.

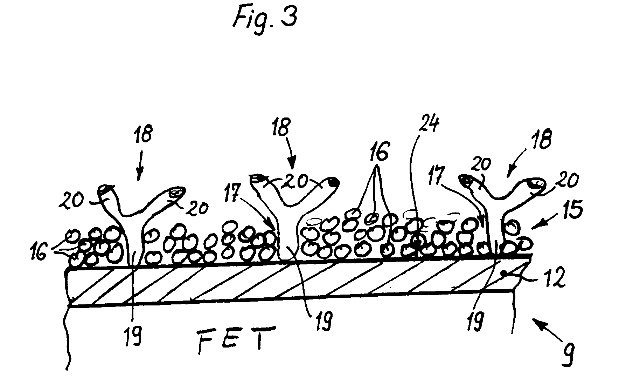

Figur 2 zeigt einen einzelnen FET-Sensor 5, der einen auf elektrische Felder sehr empfindlich reagierenden Feldeffekttransistor 9 aufweist. Dieser Feldeffekttransistor 9 weist ein Siliziumsubstrat 21 auf, in das für Drain und Source hochdotierte Zonen 22,23 mit zum Substrat entgegengesetztem Leitungstyp eindiffundiert sind. Darüber befindet sich als Dielektrikum eine Siliziumoxydschicht 12, die außenseitig eine aktive Sensor-Kontaktschicht bildet, über die der FET steuerbar ist.
Auf der Schicht 12 aus Siliziumoxyd befindet sich ein Tropfen Nährlösung 10 mit darin enthaltenen Zellen 11. Jede Zelle 11 trägt auf ihrer Hülle verschiedene Rezeptoren 13. In der Nährlösung 10 schwimmen zu den Rezeptoren passende Botenstoffe 14, die sich bei den jeweils dazu passenden Rezeptoren an der Zelle verankern können. Dies führt dazu, daß molekulare Bindungen sich verändern und elektrische Ladungen sich verschieben. Die dadurch hervorgerufene Änderung der elektrischen Parameter wird vom Feldeffekttransistor 9 gespürt und in ein elektrisches Signal umgesetzt. Damit wird aus einer biologischen Signalübertragung eine elektrische Signalübertragung. Diese kann dann problemlos verstärkt und elektrisch ausgelesen und zu diagnostischen Zwecken weiterverarbeitet werden.
Da die Siliziumoxydschicht 12 als aktive Kontaktfläche 24 des Sensors 5 nur wenig strukturiert ist, haften nicht alle Zellen über längere Zeit auf dieser Siliziumoxydschicht. Es ist deshalb vorgesehen, daß die aktive Kontaktfläche 24 des FET-Sensors strukturiert wird und damit an die Zellen-Außenstruktur angepaßt wird. Die Zellen selber sind nämlich vergleichsweise stark strukturiert und haben viele Einbeulungen und Ausstülpungen.
Zur Verdeutlichung der außenseitigen dreidimensionalen Strukturierung der aktiven Kontaktfläche 24, ist diese in Figur 3 stark vergrößert dargestellt und es ist hier die Beschichtung 15 der aktiven Kontaktfläche des Sensors 5 erkennbar. Sie besteht hier aus angelagerten Aluminiumoxyd-Clustern 16, die durch runde Kreise angedeutet sind. Von solchen Clustern läßt sich ein intensiver Strahl im Vakuum herstellen. Schießt man diesen auf eine Oberfläche, so ergibt sich je nach Energie des Strahls eine unterschiedliche Struktur dieser Oberfläche. Bei kleinen Energien (0,1 eV pro Atom) entstehen rauhe, poröse Schichten mit Hohlräumen. Die Rauhigkeit und Struktur der Oberfläche kann durch die kinetische Energie der Cluster variiert werden. Ab etwa 10 eV/Atom werden sehr glatte Schichten erreicht. Um etwa 1 eV/Atom ergeben sich geeignete Rauhigkeiten im Nanometerbereich.
Die Cluster bilden einen Verbund, dessen Struktur unter anderem davon abhängt, mit welcher Energie sie auf die dielektrische Schicht 12 des Feldeffekttransistors 9 aufgebracht werden.
Wie bereits vorerwähnt, haben Versuche gezeigt, daß sich für die Verankerung von Zellen geeignete Rauigkeiten ergeben, wenn die kinetische Energie der aufgeschossenen Cluster etwa 1 eV/Atom beträgt. Dabei werden etwa 5000 Atome jeweils zu einem Cluster zusammengelagert, wobei jeder Cluster etwa einen Durchmesser von 10 Nanometern hat.
Es besteht aber auch die Möglichkeit, größere Aluminium-Cluster mit etwa 12000 Atomen pro Cluster und geringerer kinetischer Energie auf der FET-Schicht 12 zu deponieren.
Die aufgeschossenen Cluster 16 werden dann oxydiert und getempert, was zu einer porösen, aber harten Aluminiumoxydschicht führt. Die Aluminiumoxydschicht kann mit verschiedenen Techniken (Plasmabeschußtechnik, Ätztechnik) so bearbeitet wird, daß Risse und Lücken 17 entstehen.
In die so entstandenen Löcher, die einen Durchmesser von etwa 10nm haben können, lassen sich besonders gut beispielsweise Immun-Rezeptoren 18 (Gamma-Globulin, ein Y-förmiges Bio-Molekül) direkt verankern, wie dies in Figur 3 angedeutet ist. Da nun der den FET-beeinflussende Ladungstransfer-Vorgang sehr viel näher an dem FET abläuft, weil die Zwischenfunktion der Zelle selber ausgeschaltet ist, ist auch ein wesentlich höheres elektrisches Signal zu erwarten. Damit ist die Meßempfindlichkeit entsprechend verbessert.
Als Strukturierungsmaterial kann anstatt Aluminiumoxyd unter anderem auch Siliziumnitrid verwendet werden. Das jeweils verwendete Strukturierungsmaterial richtet sich nach den für das jeweilige Meßverfahren relevanten Anforderungen. So wird Siliziumnitrid dann verwendet, wenn eine erhöhte Spannungssensitivität gefordert ist, während Aluminiumoxyd bei hohen Anforderungen an die pH-Sensitivität verwendet wird.

Die Immun-Rezeptoren 18 sind durch Y-förmige Biomoleküle gebildet, die mit ihren Halteregionen 19, mit denen sie normalerweise in der Zellwand stecken, direkt in die poröse, keramische Struktur eingreifen, wodurch sie dort sehr gut verankert sind und die Sensoren insgesamt eine viel bessere Langzeitstabilität aufweisen. Die beiden sensorisch empfindlichen Enden 20 der Immun-Rezeptoren 18 ragen nach außen aus der Beschichtung 15 hervor.
Das Verankern der Immun-Rezeptoren 18 in der Beschichtung 15 kann durch ein Sedimentationsverfahren mit anschließenden Spülvorgängen erfolgen.

## Patentansprüche

1. Verfahren zum Herstellung einer Meßeinrichtung zur Messung oder Untersuchung physiologischer Parameter an Biokomponenten, mit wenigstens einem Sensor (5), der eine Meßstruktur mit einer aktiven Kontaktfläche (24) für die Biokomponenten aufweist, **dadurch gekennzeichnet**, daß die aktive Kontaktfläche (24) des Sensors (5) etwa entsprechend der äußeren Umrißform der jeweiligen Biokomponenten strukturiert wird.

2. Verfahren nach Anspruch 1, dadurch gekennzeichnet, daß auf die aktive Kontaktfläche (24) des Sensors (5) Materialpartikel aus Aluminium zur Bildung von Clustern (16) aufgeschossen werden und daß die Cluster-Beschichtung (15) anschließend oxydiert und getempert wird.

3. Verfahren nach Anspruch 1 oder 2, dadurch gekennzeichnet, daß zur Bildung von Clustern (16) aus 5000 Atomen, Materialpartikel mit einer kinetischen Energie von 1 eV/Atom auf die aktive Kontaktfläche (24) aufgebracht werden und daß die Cluster-Beschichtung anschließend oxydiert und getempert wird.

4. Verfahren nach einem der Ansprüche 1 bis 3, dadurch gekennzeichnet, daß die Form der Biokomponenten in einer Abdrucktechnik übernommen wird und daß die Kontaktflächen-Beschichtung (15) mittels Replikatechnik, insbesondere mittels Plasmabeschußtechnik oder Ätztechnik mit der etwa der Form der Biokomponenten entsprechenden, komplementären Gegenstrukturierung versehen wird.

5. Verfahren nach einem der Ansprüche 1 bis 4, dadurch gekennzeichnet, daß zur Bildung einer Kontaktflächen-Beschichtung (15) mit vergleichsweise lockerem Gefüge beziehungsweise Lücken, für einen Molekularsieb-Effekt Materialpartikel zur Bildung von Clustern (16) mit einer kinetischen Energie kleiner als 1 eV/Atom auf die aktive Kontaktfläche (24) aufgeschossen werden und daß die Cluster-Beschichtung anschließend oxydiert und getempert wird.

6. Meßeinrichtung zur Messung oder Untersuchung physiologischer Parameter an Biokomponenten, mit wenigstens einem Sensor (5), der einen mit einer Auswerteeinrichtung verbindbaren Meßausgang aufweist, wobei der Sensor (5) eine Meßstruktur mit einer aktiven Kontaktfläche (24) für die Biokomponenten aufweist, zur Durchführung des Verfahrens nach einem der Ansprüche 1 bis 5, **dadurch gekennzeichnet**, daß die aktive Kontaktfläche (24) des Sensors (5) eine an die Form der zu untersuchenden Biokomponente etwa angepaßte Oberflächentopographie aufweist.

7. Meßeinrichtung nach Anspruch 6, dadurch gekennzeichnet, daß die Oberflächentopographie der Sensor-Kontaktfläche (24) beziehungsweise einer Kontaktflächen-Beschichtung (15), im wesentlichen eine komplementäre Gegenstrukturierung der jeweiligen Biokomponenten ist.

8. Meßeinrichtung nach Anspruch 6 oder 7, dadurch gekennzeichnet, daß die Kontaktflächen-Beschichtung (15) bis nahe an oder bis zu der Kontaktfläche (24) sich erstreckende Lücken (17) zum Eingreifen von Biokomponenten oder Teilen davon aufweist.

9. Meßeinrichtung nach einem der Ansprüche 6 bis 8, dadurch gekennzeichnet, daß der Sensor einen Feldeffekttransistor (9) mit einer Beschichtung (15) seiner Kontaktfläche (24) aus Aluminiumoxyd, Siliziumnitrid oder dergleichen Strukturierungsmaterial aufweist.

10. Meßeinrichtung nach einem der Ansprüche 6 bis 9, dadurch gekennzeichnet, daß die Kontaktfläche (24) des Sensors (5), beziehungsweise deren Beschichtung (15), eine Rauhigkeit im Nanometerbereich aufweist.

## Claims

1. Process for producing a measuring device for measuring or investigating physiological parameters on biocomponents, having at least one sensor (5) which has a measuring structure with an active contact surface (24) for the biocomponents, characterised in that the active contact surface (24) of the sensor (5) is structured substantially to correspond to the outer contour shape of the biocomponents in question.

2. Process according to claim 1, characterised in that particles of aluminium material are fired onto the active contact surface (24) of the sensor (5) to form clusters (16) and the cluster coating (15) is subsequently oxidised and tempered.

3. Process according to claim 1 or 2, characterised in that, to form clusters (16) of 5000 atoms, particles of material are applied to the active contact surface (24) with a kinetic energy of 1 eV/atom and the cluster coating is subsequently oxidised and tempered.

4. Process according to one of claims 1 to 3, characterised in that the shape of the biocomponents is copied by taking an impression and the contact surface coating (15) is provided with complementary counter structuring substantially corresponding to the shape of the biocomponents by a replica technique, particularly by plasma bombardment or etching.

5. Process according to one of claims 1 to 4, characterised in that in order to form a contact surface coating (15) with a comparatively loose structure or gaps, for a molecular sieve effect, particles of material are fired onto the active contact surface (24) with a kinetic energy of less than 1 eV/atom in order to form clusters (16) and the cluster coating is subsequently oxidised and tempered.

6. Measuring device for measuring or investigating physiological parameters on biocomponents, having at least one sensor (5) which comprises a measuring output adapted to be connected to an evaluating device, the sensor (5) having a measuring structure with an active contact surface (24) for the biocomponents, in order to carry out the process according to one of claims 1 to 5, characterised in that the active contact surface (24) of the sensor (5) has a surface topography which substantially matches the shape of the biocomponent which is to be investigated.

7. Measuring device according to claim 6, characterised in that the surface topography of the sensor contact surface (24) or of a contact surface coating (15) is substantially a complementary counter structuring of the biocomponents in question.

8. Measuring device according to claim 6 or 7, characterised in that the contact surface coating (15) has gaps (17) extending close to or right up to the contact surface (24) for the engagement of biocomponents or parts thereof.

9. Measuring device according to one of claims 6 to 8, characterised in that the sensor has a field effect transistor (9) with a coating (15) on its contact surface (24) consisting of aluminium oxide, silicon nitride or a similar structuring material.

10. Measuring device according to one of claims 6 to 9, characterised in that the contact surface (24) of the sensor (5) or the coating (15) thereof has roughness in the nanometre range.

## Revendications

1. Procédé pour fabriquer une installation de mesure destinée à mesurer ou analyser des paramètres physiologiques sur des biocomposants, comportant au moins un capteur(5) qui présente une structure de mesure avec surface de contact active (24) pour les biocomposants, caractérisé en ce que la surface de contact active (24) du capteur (5) est structurée de façon approximativement correspondante à la forme externe du profil des biocomposants respectifs.

2. Procédé selon la revendication 1, caractérisé en ce que sont projetées, sur la surface de contact active (24) du capteur (5), des particules de matériau en aluminium pour former des agrégats (16) et en ce que la couche de recouvrement des agrégats (15) est ensuite oxydée et trempée.

3. Procédé selon la revendication 1 ou 2, caractérisé en ce que, pour former des agrégats (16) de 5000 atomes, on applique sur la surface de contact active (24) des particules de matériau présentant une énergie cinétique d'environ 1 eV/atome, et en ce que la couche de recouvrement des agrégats est ensuite oxydée et trempée.

4. Procédé selon l'une des revendications 1 à 3, caractérisé en ce que la forme des biocomposants est réalisée selon une technique de réplique et en ce que la couche de recouvrement des surfaces de contact (15) est pourvue, au moyen d'une technique de réplication, en particulier au moyen d'une technique de bombardement au plasma ou d'une technique de gravure, d'une contre-structuration complémentaire correspondant environ à la forme des biocomposants.

5. Procédé selon l'une des revendications 1 à 4, caractérisé en ce que, pour former une couche de recouvrement avec des surfaces de contact (15) présentant une structure proportionnellement lâche ou des vides, on projette pour effet de tamis moléculaire sur la surface de contact active (24) des particules de matériau destinées à former des agrégats (16) avec une énergie cinétique inférieure à 1 eV/atome, et en ce que la couche de recouvrement des agrégats est ensuite oxydée et trempée.

6. Installation de mesure destinée à mesurer ou analyser les paramètres physiologiques de biocomposants, équipée d'au moins un capteur (5) qui présente une sortie de mesure pouvant être reliée à une installation d'évaluation, le capteur (5) possédant une structure de mesure avec surface de contact active (24) pour les biocomposants, afin de réaliser le procédé selon l'une des revendications 1 à 5, caractérisée en ce que la surface de contact active (24) du capteur (5) possède une topographie superficielle approximativement adaptée à la forme des biocomposants à analyser.

7. Installation de mesure selon la revendication 6, caractérisée en ce que la topographie superficielle de la surface de contact du capteur (24) ou d'une couche de recouvrement des surfaces de contact (15) représente essentiellement une contre-structuration complémentaire des biocomposants respectifs.

8. Installation de mesure selon la revendication 6 ou 7, caractérisée en ce que la couche de recouvrement des surfaces de contact (15) présente des vides (17) s'étendant jusque près de ou jusqu'à la surface de contact (24) afin d'engrener des biocomposants ou des parties de ceux-ci.

9. Installation de mesure selon l'une des revendications 6 à 8, caractérisée en ce que le capteur possède un transistor à effet de champ (9) possédant une couche de recouvrement (15) de sa surface de contact (24) en oxyde d'aluminium, en nitrure de silicium ou dans un matériau de structuration équivalent.

10. Installation de mesure selon l'une des revendications 6 à 9, caractérisée en ce que la surface de contact (24) du capteur (5), ou sa couche de recouvrement (15), possède une rugosité dans la gamme des nanomètres.
